# EUROPÄISCHE PATENTSCHRIFT

(11) **EP 0 433 316 B1**
(45) Veröffentlichungstag und Bekanntmachung des Hinweises auf die Patenterteilung: **16.03.1994**
(21) Anmeldenummer: 89909707.5
(22) Anmeldetag: 02.09.1989
(51) Int. Cl.: G01N 29/00

(54) **VERFAHREN UND VORRICHTUNG ZUR ÜBERWACHUNG DER SPANABHEBENDEN BEARBEITUNG EINES WERKSTÜCKES**
PROCESS AND DEVICE FOR MONITORING MACHINING OF A WORKPIECE
PROCEDE ET DISPOSITIF POUR CONTROLER L'USINAGE PAR ENLEVEMENT DE COPEAUX D'UNE PIECE

(30) Priorität: 02.09.1988 DE 3829825
(43) Veröffentlichungstag der Anmeldung: 26.06.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: WASCHKIES, Eckhard, D-6653 Blieskastel (DE); HEPP, Klaus, D-6657 Rubenheim (DE)
(74) Vertreter: Rackette, Karl, Dipl.-Phys. Dr.-Ing
(86) Internationale Anmeldenummer: DE8900572
(87) Internationale Veröffentlichungsnummer: WO9002944

(56) Entgegenhaltungen:
- EP-A- 0 045 942
- US-A- 4 332 161
- Patents Abstracts of Japan, Band 10, Nr. 116 (P-452)(2173), 30. April 1986; & JP, A, 60244856
- Patents Abstracts of Japan, Band 11, Nr. 5 (P-533)(2452), 8. Januar 1987; & JP, A, 61182570

## Beschreibung

Die Erfindung betrifft ein Verfahren zur Überwachung der spanabhebenden Bearbeitung eines Werkstückes, insbesondere beim Drehen, durch Analysieren der am Werkzeug erfaßbaren Schallemission, die mit Hilfe eines elektroakustischen Wandlers in ein elektrisches Schallemissionssignal umgewandelt wird, das in einem Bandpaßfilter gefiltert wird und dessen Amplitude erfaßt und über einen vorgegebenen Zeitraum gemittelt mit einem vorgegebenen anpaßbaren Schwellenwert verglichen wird.

Außerdem betrifft die Erfindung eine Vorrichtung zur Durchführung des Verfahrens mit einem am Werkzeughalter angeordneten, das Schallemissionssignal umsetzenden elektroakustischen Wandler, der über einen Bandpaßfilter, einen Verstärker und einen Amplitudendetektor einen Mittelwertbildner speist, dessen Ausgangssignal den ersten Eingang eines Komparators speist, dessen zweiter Eingang mit einer Schwellenwertspannung beaufschlagt ist.

Ein derartiges Verfahren und eine derartige Vorrichtung sind aus der US-PS 4 332 161 bekannt und gestatten es, am Ausgang eines Komparators ein Ausgangssignal zu erzeugen, wenn der Werkzeugverschleiß ein vorgegebenes Ausmaß überschritten hat. Da das Schallemissionssignal pulsartige Spanbruchsignale enthält, deren Häufigkeit und Amplitude nicht unmittelbar eindeutig mit dem Werkzeugverschleiß und der Bearbeitungsqualität zusammenhängen, ist die Ausgangsspannung des zur Mittelwertbildung eingesetzten Integrators Störeinflüssen unterworfen, weshalb die Ausgangsspannung des Integrators und daher das Umschalten des Komparators nicht zuverlässig einem vorgegebenen Werkzeugverschleiß zugeordnet werden kann. Die am Ausgang des Integrators anstehende Spannung verändert sich in Abhängigkeit von der Spanbruchfolge und ist somit kein zuverlässiges Maß für den Werkzeugverschleiß.

Aus der EP-A-45 942 ist eine Schaltungsanordnung bekannt, mit der zur Feststellung eines Werkzeugverschleißes mittels einer Triggerschaltung nur diejenigen Werte des Schallemissionsverschleißes berücksichtigt werden, die außerhalb störender Signale zugeordneter Zeitfenster auftreten. Beim Gegenstand dieser Druckschrift liegen jedoch die Störsignale und die zu überwachenden Schallemissionssignale zeitlich hintereinander. Eine Überlagerung des zu überwachenden Schallemissionssignales von Störsignalen tritt hier nicht auf.

Ausgehend von diesem Stand der Technik liegt der Erfindung die Aufgabe zugrunde, ein Verfahren und eine Vorrichtung zu schaffen, die es gestattet, zuverlässig alle Verschleißformen genau zu erfassen und das Spanbruchverhalten zuverlässig zu bewerten.

Diese Aufgabe wird erfindungsgemäß bei dem eingangs genannten Verfahren dadurch gelöst, daß die im Schallemissionssignal enthaltenen Anteile des aus dem Schneidgeräusch und Reibgeräusch resultierenden kontinuierlichen Grundgeräuschsignales einerseits und der diesem gegenüber mit einer höheren Amplitude überlagerten pulsartigen Spanbruchsignal andererseits separiert und getrennt ananlysiert sowie bewertet werden, wobei zur Trennung des Spanbruchsignals und des Grundgeräuschsignals das Schallemissionssignal mit einem Schwellenwertsignal verglichen wird, das aus dem Rauschmittelwert des Grundgeräuschsignals abgeleitet wird, indem für die Mittelwertbildung durch Ausblenden nur diejenigen Werte des Schallemissionssignales berücksichtigt werden, die außerhalb den Spanbruchsignalen zugeordneten Zeitfenstern auftreten.

Eine Vorrichtung zur Durchführung des Verfahrens ist dadurch gekennzeichnet, daß dem Mittelwertbildner eine von einem Meßtor angesteuerte Umschalteinrichtung zugeordnet ist, durch die die Speisung des Mittelwertbildners mit dem Schallemissionssignal während der pulsartigen Spanbruchsignale unterbrechbar ist.

Dadurch, daß zur Bewertung des Werkzeugversehleißes und der Bearbeitungsqualität die charakteristischen Signalanteile separiert und getrennt analysiert sowie statistisch ausgewertet werden, wird eine hohe Zuverlässigkeit in der Bewertung und daraus resultierenden Überwachung erreicht.

Zweckmäßige Ausgestaltungen und Weiterbildungen der Erfindung sind Gegenstand von Unteransprüchen. Nachfolgend wird die Erfindung anhand eines in der Zeichnung dargestellten Ausführungsbeispiels näher erläutert. Es zeigen:
- Fig. 1: ein Blockschaltbild eines Schallemissionsanalysegerätes gemäß der Erfindung und
- Fig. 2: ein Blockschaltbild der Trennstufe des erfindungsgemäßen Schallemissionsanalysegerätes.

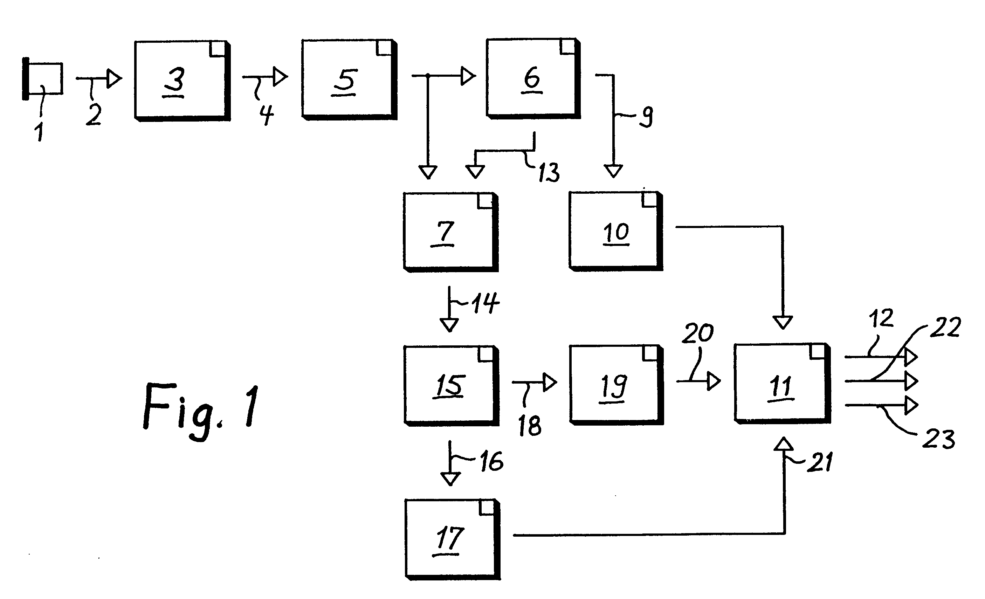

Das in Fig. 1 insgesamt im Blockschaltbild dargestellte Schallemissionsanalysegerät zur Überwachung des Spanverhaltens und des Werkzeugverschleißes bei einer spanabhebenden Bearbeitung, insbesondere beim Drehen, gestattet es, die Bearbeitungsqualität und die Qualität des Drehvorganges laufend zu bewerten, indem die durch mehrere verschiedene physikalische Prozesse beim Drehen erzeugte Schallemission erfaßt und verarbeitet wird. Die auszuwertende Schallemission wird breitbandig am Werkzeughalter mit einem in Fig. 1 schematisch dargestellten elektroakustischen Wandler 1 aufgenommen. Der elektroakustische Wandler 1 ist breitbandig und besteht beispielsweise aus einer piezoelektrischen Sonde. Die Bandbreite des Wandlers erstreckt sich von 20 kHz bis 2 MHz.

Der Wandler 1 wandelt die beim Drehprozeß auftretende Schallemission in ein elektrisches Signal um, das über eine Leitung 2 an einen Bandpaßfilter 3 gelangt. Das zum Bandpaßfilter 3 gelangende elektrische Schallemissionssignal enthält Signalanteile, die beim Drehprozeß durch die Materialtrennung, durch die plastische Verformung vor der Schneide, durch Reibvorgänge zwischen dem Werkstück und dem Werkzeug, durch Reibvorgänge zwischen dem erzeugten Span und dem Werkzeug, durch Brechen der Späne und durch Brechvorgänge am Werkzeug (Werkzeugausbrüche) ausgelöst werden.

Durch das Brechen der Späne entstehen pulsartige Spanbruchsignale, deren Amplitudenspitzen größer sind als der Pegel eines kontinuierlichen Grundgeräuschsignals, das aus einem Schneidgeräusch und einem Reibgeräusch aufgrund der oben erwähnten physikalischen Prozesse entsteht.

Das Bandpaßfilter 3 dient dazu, die niederfrequenten Signalanteile der Spanbruchsignale so weit abzuschwächen, daß keine Überlappung der einzelnen Spanbruchsignale mehr stattfindet, die sehr breitbandig sind und deren niederfrequente Anteile im Werkzeughalter relativ schwach gedämpft hin und her laufen und daher die Signaldauer der Spanbruchsignale bestimmen. Bei hohen Spanbruchfolgen könnte es ohne Verwendung eines Filters zu unerwünschten Überlappungen der einzelnen Impulse der Spanbruchsignale kommen, was deren Auswertung behindert.

Das Bandpaßfilter 3 ist vorzugsweise einstellbar auf eine untere Grenzfrequenz zwischen 20 und 500 kHz. Die obere Grenzfrequenz des Bandpaßfilters 3 beträgt etwa 2 MHz. Um die einzelnen Impulse der Spanbruchsignale möglichst gut zu erkennen, ist vorgesehen, das Bandpaßfilter 3 in Abhängigkeit von den Fertigungsparametern und dem zu bearbeitenden Werkstoff auf die jeweils günstigste Mittenfrequenz einzustellen. Bei spröden Werkstoffen sowie bei kurzen Spänen ist es zweckmäßig, die Mittenfrequenz zu erhöhen, während bei duktilen Werkstoffen und langen Spänen ein Absenken der Mittenfrequenz zweckmäßig ist. Zusätzlich zum Erkennen der Einzelimpulse der Spanbruchsignale dient das Bandpaßfilter 3 auch dazu, Maschinengeräusche abzudämpfen.

Das gefilterte Schallemissionssignal, das sich aus dem kontinuierlichen Grundgeräuschsignal und den pulsartigen Spanbruchsignalen zusammensetzt, gelangt über eine Verstärkereingangsleitung 4 zu einem Breitbandverstärker 5. Der Breitbandverstärker 5 dient einerseits dazu, das Schallemissionssignal auf die für die weitere Verarbeitung erforderliche Spannung zu verstärken. Außerdem enthält der Breitbandverstärker 5 einen Detektor oder Betragsbildner in Form eines Zweiweggleichrichters oder einer Quadrierschaltung, wenn die nachfolgenden Stufen analoge Eingangssignale benötigen, oder einen Analog-Digitalwandler, wenn die nachfolgenden Stufen in Digitaltechnik realisiert sind.

Der Ausgang des Breitbandverstärkers 5 speist die Signaleingänge einer Trennstufe 6 und eines Spanbruchsignalprozessors 7.

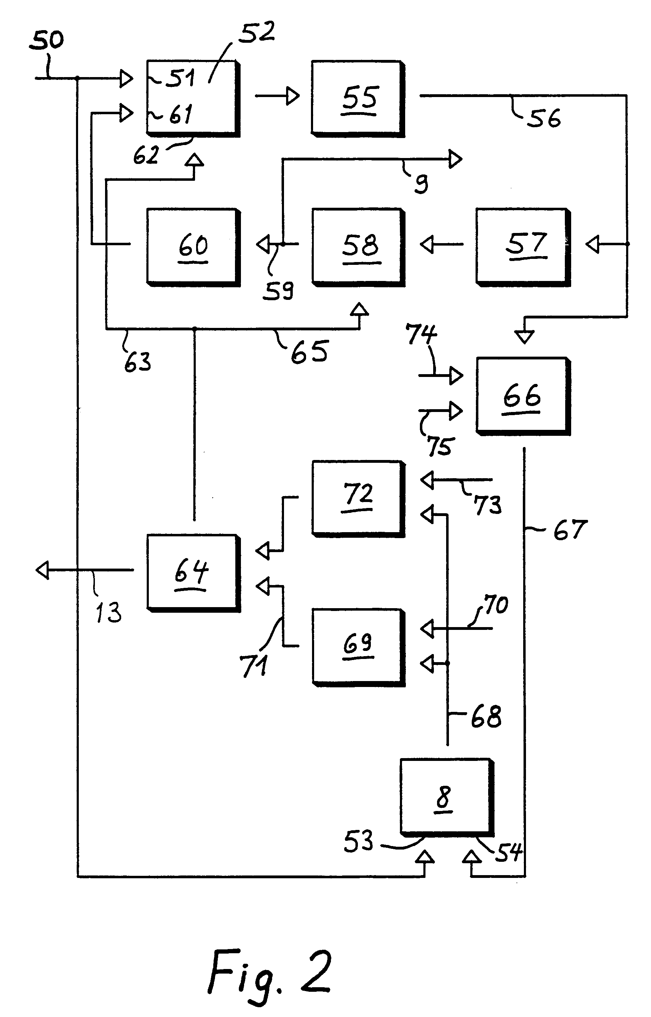

Die Trennstufe 6 ermöglicht es, die im Schallemissionssignal enthaltenen pulsartigen Spanbruchsignale vom kontinuierlichen Grundgeräuschsignal zu trennen. Dabei wird ausgenutzt, daß die pulsartigen Spanbruchsignale Amplitudenspitzen aufweisen, die das Grundgeräuschsignal wesentlich übersteigen. Die in Fig. 2 dargestellte Trennstufe verfügt über einen Komparator 8, der das verstärkte Schallemissionssignal mit einem Schwellenwertsignal vergleicht. Das Schwellenwertsignal liegt immer oberhalb des Pegels des Grundgeräuschsignals, so daß nur die Impulse der pulsartigen Spanbruchsignale den Komparatorausgang jeweils vom ersten Zustand in einen zweiten Zustand umschalten. Somit ist es möglich, die einzelnen Impulse der Spanbruchsignale zu erfassen und zu separieren bzw. auszublenden.

Das dem Komparator 8 der Trennstufe 6 zugeführte Schwellenwertsignal paßt sich automatisch den jeweiligen Signalverhältnissen an. Dazu ist es vorgesehen, das Schwellenwertsignal durch eine Mittelwertbildung aus dem Schallemissionssignal abzuleiten, wobei die Schallemissionssignalwerte während des Auftretens der pulsartigen Spanbruchsignale unberücksichtigt bleiben. Dadurch paßt sich das Schwellenwertsignal unabhängig von den Spanbruchsignalen selbsttätig dem Pegel des jeweiligen kontinuierlichen Grundgeräuschsignals an, denn durch das Ausblenden der Impulse der Spanbruchsignale wird erreicht, daß Veränderungen der Impulsamplituden oder der Häufigkeit der Spanbruchsignale ohne Einfluß auf das Schwellenwertsignal bleiben. Das dem Komparator 8 der Trennstufe 6 zugeführte Schwellenwertsignal wird erzeugt, indem das Schallemissionssignal jeweils über einen vorgegebenen Zeitraum gemittelt wird, wobei jedoch bei der Mittelwertbildung die Impulse der Spanbruchsignale ausgeblendet, d.h. nicht berücksichtigt werden.

Eine derartige Separierung des den Schneid- und Reibgeräuschen zugeordneten Grundgeräuschsignals und der dem Brechen der Späne zugeordneten Spanbruchsignale ist zweckmäßig, weil sich die beiden Signalanteile unabhängig voneinander ändern können. Zur Bildung des Schwellenwertsignals werden die Impulse der Spanbruchsignale ausgeblendet, da deren Berücksichtigung beim Mitteln des Schallemissionssignals über einen vorgegebenen Zeitraum zu einem wenig brauchbaren Signal führen würde, weil Veränderungen des Pegels des Grundgeräuschsignals und der Impulsamplituden der Spanbruchsignale verschieden stark und sogar in unterschiedlichen Richtungen erfolgen können.

Die Trennstufe 6 enthält einen tastbaren Integrator oder Mittelwertbildner, der laufend den Mittelwert, z.B. den RMS-Wert, des über eine vorgegebene Zeitspanne ermittelten Grundgeräuschsignals liefert, indem eine Mittelung des Schallemissionssignals unter Ausblenden der Zeitabschnitte erfolgt, die den Impulsen der Spanbruchsignale zugeordnet sind. Weitere Einzelheiten der Funktion des Aufbaus der Trennstufe 6 werden weiter unten anhand der Fig. 2 erläutert.

Die Trennstufe 6 speist über einen ersten Ausgang und eine Grundgeräuschsignalleitung 9 einen Grundgeräuschsignalprozessor 10 mit Daten, die unabhängig von der Spanbruchfolgefrequenz und den Impulsamplituden der Spanbruchsignale sind.

Der Grundgeräuschsignalprozessor 10 führt eine statistische Analyse des gemittelten Grundgeräuschsignals durch. Dazu wird das gemittelte Grundgeräuschsignal zunächst parametrisiert, indem in vorgebbaren Zeitintervallen der mittlere Signalpegel des Grundgeräuschsignals sowie die Frequenz des dominierenden spektralen Anteils im Grundgeräuschsignal ermittelt werden. Außerdem gestattet der Grundgeräuschsignalprozessor das Bestimmen der Verteilungsfunktion der spektralen Hauptanteile des Grundgeräuschs, und der Verteilungsfunktion des Pegels des über vorgebbare Zeitintervalle gemittelten Grundgeräuschsignals sowie der daraus ableitbaren Streubreiten. Die Verteilung des gemittelten Grundgeräuschpegels wird dabei beispielsweise über einen Zeitraum zwischen 1 und 10 Sekunden ermittelt. Die Breite der Verteilungsfunktion des gemittelten Grundgeräuschpegels ist ein Maß für den Freiflächen und/oder Kolkverschleiß.

Der Grundgeräuschsignalprozessor 10 ermittelt nicht nur die Häufigkeitsverteilung des gemittelten Grundgeräuschpegels sondern gestattet es auch, diese zu analysieren, indem das jeweilige Maximum, die Breite, die Schiefe, der Exzess und andere Größen bestimmt werden.

Die vom Grundgeräuschsignalprozessor 10 aufgrund des jeweils über 10 Mikrosekunden bis 1 Millisekunde gemittelten Grundgeräuschsignals erzeugten Daten speisen einen Bewertungsprozessor 11 , der auch als Auswerteeinheit dient. Der Bewertungsprozessor 11 überwacht insbesondere, ob die Verteilung des gemittelten Grundgeräuschsignalpegels eine vorgegebene Breite überschreitet. Ist dies der Fall, wird über eine Verschleißausgangsleitung 12 ein entsprechendes Ausgangssignal zur Weiterverarbeitung oder zum Abbrechen der Bearbeitung des Werkstückes infolge zu hohen Werkzeugverschleißes abgegeben. Auch wenn der mittlere Signalpegel oder die Frequenz des dominierenden Spektralanteils einen Verschleiß des Werkzeugs, das im mit dem Wandler 1 versehenen Werkzeughalter eingespannt ist, anzeigt, wird auf der Verschleißausgangsleitung 12 ein Signal durch den Bewertungsprozessor 11 abgegeben.

Um die Überwachung des Werkzeugverschleißes zu verbessern und besonders zuverlässig zu gestalten, sowie zur Überwachung des Spanverhaltens ist neben der Auswertung des separierten sowie gemittelten Grundgeräuschsignals eine Analyse und Auswertung der Spanbruchsignale vorgesehen.

Wie man in Fig. 1 erkennt, wird der Spanbruchsignalprozessor 7 einerseits über den Ausgang des Breitbandverstärkers 5 und andererseits über eine Meßtorsignalleitung 13 mit Eingangssignalen beaufschlagt. Die Meßtorsignalleitung 13 liefert von der Trennstufe 6 erzeugte Freigabesignale, die dem Spanbruchsignalprozessor 7 jeweils mitteilen, wann am Ausgang des Breitbandverstärkers 5 Impulse des Spanbruchsignals anliegen.

Der Spanbruchsignalprozessor 7 verarbeitet daher nur die den Spanbruchsignalen zugeordneten Abschnitte des Schallemissionssignals. Um den zeitlichen Verlauf der pulsartigen Spanbruchsignale zu analysieren, verfügt der Spanbruchsignalprozessor 7 über eine interne Uhr, die es insbesondere gestattet, die Ankunftszeiten und die Signaldauern der Spanbruchsignale zu bestimmen. Neben den erwähnten Parametern ermittelt der Spanbruchsignalprozessor 7 auch die Spitzenamplituden der pulsartigen Spanbruchsignale.

Die von dem Spanbruchsignalprozessor 7 ermittelten Burstsignalparameter gelangen über eine Prozessorausgangsleitung 14 zu einem Häufigkeitsprozessor 15, der eine statistische Analyse der verschiedenen Signalparameter durchzuführen gestattet und insbesondere Verteilungsfunktionen der verschiedenen erwähnten Parameter ermittelt.

Da der Spanbruchsignalprozessor 7 die Ankunftszeiten und Signaldauern der Spanbruchsignalimpulse ermittelt, gestattet es der Häufigkeitsprozessor 15, eine Verteilungsfunktion der zeitlichen Abstände zwischen den einzelnen Impulsen der Spanbruchsignale zu bestimmen. Die ermittelte Häufigkeitsverteilung zeigt, daß die Spanbruchsignale jeweils aus einer Signalgruppe mit mehreren Einzelimpulsen bestehen. Jedem Spanbruch ist eine Signalgruppe zugeordnet, wobei die Spanbruchfolge die Abstände zwischen den Signalgruppen bestimmt.

Aus der Verteilungsfunktion der Abstände der Impulse der Spanbruchsignale wird durch den Häufigkeitsprozessor 15 ein Signalabstandsfilter definiert. Alle Einzelimpulse der Spanbruchsignale, deren zeitlichen Abstände zum nachfolgenden Einzelimpuls kürzer sind als ein aus der Signalabstandsverteilungsfunktion ermittelter Wert werden mit Hilfe des Häufigkeitsprozessors 15 zu Signalgruppen zusammengefaßt.

Im Häufigkeitsprozessor 15 werden die zeitlichen Abstände der einzelnen Signalgruppen ermittelt, wobei beispielsweise der zeitliche Abstand des jeweils letzten Signals einer Gruppe zum letzten Signal der nächsten Gruppe erfaßt wird. Die Werte der zeitlichen Abstände der Signalgruppen, die den zeitlichen Abständen zwischen den Spanbrüchen entsprechen, werden zur statistischen Analyse über eine erste Ausgangsleitung 16 einem Spanbruchfolgeprozessor 17 zugeführt.

Über eine zweite Ausgangsleitung 18 liefert der Häufigkeitsprozessor 15 Häufigkeitsverteilungen der Signalamplituden in Form einer Verteilungsfunktion der Spitzenamplituden der Einzelimpulse in den Spanbruchsignalen. Die Verteilungsfunktion der Spitzenamplituden wird in einem Amplitudenprozessor 19 ausgewertet, der gemäß einer Weiterbildung des Verfahrens, auf dem das in Fig. 1 dargestellte Schallemissionsanalysegerät beruht, zusätzlich zu der Verteilungsfunktion der Amplituden auch eine Verteilungsfunktion der Energien der pulsartigen Spanbruchsignale verarbeitet. Dazu werden im Spanbruchsignalprozessor 7 nicht nur die maximalen Amplituden der Einzelimpulse oder Bursts sondern auch deren Energien ermittelt, die sich jeweils aus dem zeitlichen Integral der Amplitudenquadrate über die Dauer eines Einzelimpulses ergeben.

Der Amplitudenprozessor 19 gestattet es, die ihm zugeführte Amplitudenverteilung der Spanbruchsignale in einer besonderen Weise auszuwerten. Dabei wird für ein vorgebbares Amplitudenintervall, das sich von kleinen Amplituden bis zu einer Amplitude unterhalb der maximal auftretenden Amplitude erstreckt, ohne Berücksichtigung der darüberliegenden Amplituden eine Verteilungsfunktion durch eine Annäherungsfunktion (best fit process) ermittelt. Aufgrund dieser aus einem Teil der tatsächlich auftretenden Amplitudenverteilung abgeleiteten Funktion wird dann die Anzahl der Signale berechnet, die aufgrund dieser Verteilungsfunktion oberhalb eines Grenzwertes auftreten sollten. Der Amplitudenprozessor 19 erhält aber über die zweite Ausgangsleitung 18 auch die Information bezüglich der tatsächlichen Anzahl der Signale mit Amplituden oberhalb des erwähnten Grenzwertes. Im Amplitudenprozessor 19 werden beide Werte miteinander verglichen, d.h. es wird geprüft, ob die Anzahl der Signale mit Amplituden oberhalb des Grenzwertes der Zahl entspricht, die sich aus der Amplitudenverteilung des Signale unterhalb des Grenzwertes errechnen läßt. Ist die tatsächliche Anzahl der Signale mit Amplituden oberhalb des Grenzwertes wesentlich größer als sie es aufgrund der Verteilungsfunktion im unteren Amplitudenbereich sein dürfte, ist dies ein Hinweis auf Werkzeugausbrüche in der Schneidfläche. Die Anzahl der Amplituden, die den erwähnten bestimmten Grenzwert überschreiten, wird über eine Amplitudenleitung 20 dem Bewertungsprozessor 11 zugeführt.

Der Bewertungsprozessor 11 überwacht somit nicht nur in der oben beschriebenen Weise Parameter des Grundgeräuschsignals, sondern auch aus den Spanbruchsignalen abgeleitete Parameter.

Wie man in Fig. 1 erkennt, verfügt der Bewertungsprozessor 11 zusätzlich zu der dem Grundgeräuschsignal zugeordneten Eingangsleitung und der Amplitudenleitung 20 über eine dritte Eingangsleitung 21, die mit dem Ausgang des Spanbruchfolgeprozessors 17 in Verbindung steht. Auf diese Weise erhält der Bewertungsprozessor 11 nicht nur die Verteilungsfunktion des kontinuierlichen Grundgeräuschs sowie die Anzahl der Amplituden, die einen bestimmten Grenzwert überschreiten, sondern auch Informationen bezüglich der durch den Spanbruchfolgeprozessor 17 bestimmten Spanbruchfolgefrequenz.

Der Spanbruchfolgeprozessor 17 ermittelt dazu für jeweils vorgebbare Zeiträume die Häufigkeitsverteilung der zeitlichen Abstände der Signalgruppen. Außerdem dient der Spanbruchfolgeprozessor 17 dazu, eine Analyse dieser Verteilungsfunktion durchzuführen, wobei das Maximum der Verteilungsfunktion, deren Breite usw. ausgewertet wird.

Die zeitlichen Abstände zwischen den Signalgruppen entsprechen den zeitlichen Abständen zwischen den Spanbrüchen. Aus diesem Grund entspricht die Häufigkeitsverteilung oder die Verteilungsfunktion der Abstände der Signalgruppen der Verteilungsfunktion der Spanbruchfolge und ist damit bei bekannten Bearbeitungsparametern ein Maß für die Spanlängen. Da der Werkzeugverschleiß (Freiflächen- und Kolkverschleiß) mit einer Veränderung der Spanlängen korreliert, läßt sich aus den statistischen Parametern der Spanbruchabstandsverteilungsfunktion mit Hilfe des Bewertungsprozessors 11 der Werkzeugverschleiß ermitteln und bewerten. Dazu werden über die dritte Eingangsleitung 21 die charakteristischen Werte der Verteilungsfunktion der Spanbruchfolge (Maximum, Breite usw.) an den Bewertungsprozessor 11 weitergegeben.

Gemäß einer Ausgestaltung ist es vorgesehen, daß im Bewertungsprozessor 11 für die verschiedenen Verteilungsfunktionen der diversen Signalparameter Musterverteilungen gespeichert sind, die mit den ermittelten Verteilungsfunktionen verglichen werden. Dazu werden Abweichungen in den statistischen Momenten ermittelt. Die Ergebnisse der Verteilungsfunktionen sowie deren Abweichungen von Musterverteilungen bilden die Basis für die Bewertung des Spanverhaltens und des Werkzeugverschleiß durch den Bewertungsprozessor 11.

Neben dem Verschleißausgang 12 hat der Bewertungsprozessor 11 einen Störungsausgang 22 zum Anzeigen einer Störung bei widersprechenden Eingangsgrößen des Bewertungsprozessors 11, wie dies beispielsweise bei einem Spanklemmer der Fall ist, wenn ein steigendes Verschleißgeräusch trotz konstanter Spanbruchfolge auftritt.

Der Bewertungsprozessor 11 verfügt weiterhin über einen Dokumentationsausgang 23, durch den eine Dokumentation und Ausgabe der Eingangsgrößen des Bewertungsprozessors 11 als Dokument für die Qualität des Bearbeitungsprozesses erfolgt.

Eine der Funktionen, die vom Bewertungsprozessor 11 durchgeführt wird, besteht in einem Vergleich der Eingangsgrößen mit vorgegebenen Grenzwerten (Musterverteilungen). Bei Soll-Ist-Abweichungen wird in der nachfolgend angegebenen Weise eine Störung des Drehprozesses oder ein Werkzeugverschleiß angezeigt.

Wenn über die dritte Eingangsleitung 21 Signalzahlen pro Zeiteinheit geliefert werden, die außerhalb der vorgegebenen Grenzwerte liegen, erfolgt ein Maschinenstop, da offenbar Werkzeugausbrüche vorliegen.

Wenn vom Grundgeräuschsignalprozessor 10 Werte geliefert werden, die außerhalb der vorgegebenen Grenzwerte liegen, und die Werte am mit der Amplitudenleitung 20 verbundenen Eingang ebenfalls außerhalb der Grenzwerte liegen, ist ein Werkzeugwechsel notwendig, da Verschleißmarken überschritten werden.

Wenn die vom Grundgeräuschsignalprozessor 10 gelieferten Werte außerhalb der Grenzwerte liegen, jedoch die Werte auf der Amplitudenleitung 20 innerhalb der zulässigen Grenzen, so bedeutet dies eine Störung des Prozesses, beispielsweise einen Spanklemmer. Dies wäre so zu behandeln wie etwa eine leere Vorratshaltung von Werkzeugen o.ä.

Die im Zusammenhang mit Fig. 1 beschriebenen Baugruppen können auf verschiedene Weisen realisiert werden. Insbesondere ist dies durch gesonderte fest verdrahtete Einheiten oder durch gesonderte programmierbare Prozessoren möglich. Dabei ist es auch möglich, mehrere Prozessoren zu einem programmierbaren Prozessor zusammenzufassen.

Die Trennstufe 6, die zur Signaltrennung eine sich an das Grundgeräusch anpassende Schwellenwertspannung erzeugt, um eine Ausblendung der Impulse der Spanbruchsignale unabhängig von deren Amplitude und Frequenz zu ermöglichen, wird nachfolgend anhand eines in Fig. 2 dargestellten Ausführungsbeispiels für eine analoge Lösung näher beschrieben.

Die den Komparator 8 enthaltende und in Fig. 2 als Blockschaltbild dargestellte Trennstufe 6 ist über eine Eingangsleitung 50 mit dem Ausgang des Breitbandverstärkers 5 verbunden. Aufgrund der über die Eingangsleitung 50 eintreffenden Ausgangssignale des Breitbandverstärkers 5 erzeugt die Trennstufe 6 ein gemitteltes Grundgeräuschsignal, das über die Grundgeräuschsignalleitung 9 ausgekoppelt wird. Der in Fig. 1 dargestellte Spanbruchsignalprozessor 7 ist einerseits an den Ausgang des Breitbandverstärkers 5 und andererseits über die in den Fig. 1 und 2 dargestellte Meßtorsignalleitung 13 mit der Trennstufe 6 verbunden.

Die Eingangsleitung 50 verbindet den Ausgang des Breitbandverstärkers 5 einerseits mit dem ersten Eingang 51 eines Multiplexers 52 und andererseits mit dem Signaleingang 53 des Komparators 8, dessen Vergleichseingang 54 mit einem Schwellenwertsignal beaufschlagt ist, das in der sich aus der nachfolgenden Beschreibung ergebenden Weise erzeugt wird.

Der Ausgang des Multiplexers 52 ist mit dem Eingang eines Mittelwertbildners 55 verbunden, der das über den Multiplexer 52 eingespeiste Signal, insbesondere das kontinuierliche Grundgeräuschsignal integriert, bzw. mittelt. Die Mittelwertbildung erfolgt dabei über einen vorgegebenen Zeitraum. Die Signalmittelung kann so erfolgen, daß eine RMS-Wert-Bildung erfolgt. Der Mittelwertbildner 55 kann durch ein RC-Glied realisiert sein, oder bei einer digitalen Lösung an Stelle der in Fig. 2 dargestellten analogen Lösung ein Rechner mit einem Akkumulator und einem Dividierglied, durch die der Mittelwert einer vorgegebenen Anzahl von Abtastwerten des Eingangssignals bestimmt wird.

Der in Fig. 2 dargestellte Mittelwertbildner 55 liefert über eine Ausgangsleitung 56 ein analoges Mittelwertsignal, dessen Größe durch die Amplituden in einem vorgegebenen Zeitraum bestimmt ist. Dieser Zeitraum ist beispielsweise bei der Realisierung durch ein RC-Glied durch die Größe des Integrationskondensators gegeben.

Die Ausgangsleitung 56 ist mit dem Eingang eines Analog/Digitalwandlers 57 verbunden, der den analogen Mittelwert in einen digitalen Mittelwert umsetzt und an ein Register 58 zur Zwischenspeicherung weitergibt. Das Register 58 bildet einen digitalen Abtast- und Halteschaltkreis, durch den unter anderem ein Schwingen der Anordnung verhindert wird. Der Ausgang des Registers 58 ist mit der Grundgeräuschsignalleitung 9 verbunden, über die der jeweils aktuelle Mittelwert des Grundgeräuschsignals zum Grundgeräuschsignalprozessor 10 auskoppelbar ist. Über eine Koppelleitung 59 gelangt das digitalisierte und gemittelte Grundgeräuschsignal zu einem Digital/Analogwandler 60, dessen Ausgang mit dem zweiten Eingang 61 des Multiplexers 52 verbunden ist.

Der Multiplexer 52 ist über einen Steuereingang 62 umschaltbar, so daß wahlweise das am ersten Eingang 51 oder das am zweiten Eingang 61 liegende Signal zum Mittelwertbildner 55 durchgeschaltet werden kann. Die Anordnung der Trennstufe 6 ist dabei so getroffen, daß der erste Eingang 51 immer dann durchgeschaltet ist, wenn das kontinuierliche Grundgeräuschsignal alleine anliegt, während beim Auftreten der Spanbruchsignale der Multiplexer 52 umgeschaltet wird, so daß während der Dauer des Auftretens der Spanbruchsignale das gemittelte Grundgeräuschsignal konstant bleibt sowie zum Mittelwertbildner zurückgekoppelt wird und die während dieser Zeit auftretenden Spanbruchsignale den Mittelwert auf der Ausgangsleitung 56 und der Grundgeräuschsignalleitung 9 nicht beeinflussen. Zusätzlich wird der der Trennstufe 6 nachgeschaltete Grundgeräuschsignalprozessor vorübergehend desaktiviert. Die Umschaltung des Multiplexers 52 und des Grundgeräuschsignalprozessors 10 erfolgt über eine Steuerleitung 63, die mit einem Ausgang eines Meßtores 64 verbunden ist, der ebenfalls ein Steuersignal für das Register 58 erzeugt und über eine Steuerleitung 65 mit dem Register 58 verbunden ist. Jedesmal wenn die pulsartigen Spanbruchsignale auftreten, erzeugt das Meßtor 64 die zugeordneten Signale, wobei über die Steuerleitung 63 ein Umschalten des Multiplexers 52 zum zweiten Eingang 61 und über die Meßtorsignalleitung 13 eine Freigabe des Spanbruchsignalprozessors 7 erfolgt.

Die dem Vergleichseingang 54 des Komparators 8 zugeführte analoge Schwellenwertspannung wird mit Hilfe eines Schwellenwertgenerators 66 erzeugt, der mit dem Komparator 8 über eine Schwellenwertleitung 67 verbunden ist. Der Schwellenwertgenerator 66 wird eingangsseitig über die Ausgangsleitung 56 des Mittelwertbildners 55 mit dem gemittelten Grundgeräuschsignal beaufschlagt. Zur Erzeugung der Schwellenwertspannung wird dieses Signal in einer Multiplikationsschaltung und einer nachfolgenden Additionsschaltung aufbereitet. In der Multiplikationsschaltung wird das gemittelte Grundgeräuschsignal mit einem experimentell ermittelten Scheitelfaktor, der z.B. zwischen 1,4 und 8 liegt, multipliziert. Anschließend wird eine konstante Offsetspannung addiert, um die Schwellenwertspannung für den Komparator 8 zu erzeugen. Um die dem Komparator 8 zugeführte Schwellenwertspannung den jeweiligen Bedingungen optimal anpassen zu können, verfügt der Schwellenwertgenerator 66 über eine Offsetleitung 74 für die Eingabe eines konstanten Offset und über eine Scheitelfaktorleitung 75 zur Eingabe eines experimentell ermittelten Crestfaktors.

Wie man der Fig. 2 entnehmen kann, wird das Meßtor 64 zum Umschalten des Multiplexers 52 und Freigeben des Spanbruchsignalprozessors 7 nicht unmittelbar über die Ausgangsleitung 68 des Komparators 8 angesteuert. Vielmehr ist die Ausgangsleitung 68 mit einem wiederholt startbaren monostabilen Multivibrator 69 und einem nicht wiederholt startbaren monostabilen Multivibrator 72 verbunden. Der monostabile Multivibrator 69 dient als Verzögerungsschaltung, dessen Totzeit über eine Totzeitleitung 70 einstellbar ist und zwischen 10 µs und 1 ms liegt.

Jedesmal wenn das Schallemissionssignal am Signaleingang 53 des Komparators 8 die Schwellenwertspannung am Vergleichseingang 54 übersteigt, was während der pulsartigen Spanbruchsignale der Fall ist, wird der monostabile Multivibrator 69 gestartet. Über die Schaltleitung 71 wird das Meßtor 64 geöffnet, so daß eine Umschaltung des Multiplexers 52 zum zweiten Eingang 61 und eine Freigabe des Spanbruchsignalprozessors 7 erfolgt.

Unterschreitet das Schallemissionssignal am Signaleingang 53 des Komparators 8 die Schwellenwertspannung am Vergleichseingang 54 und die Totzeit des monostabilen Multivibrator 69 ist abgelaufen, wird über die Schaltleitung 71 das Meßtor 64 wieder geschlossen, so daß eine Umschaltung des Multiplexer 52 zum ersten Eingang 51 und eine Freigabe des Grundgeräuschprozessors 10 erfolgt. Dies ist am Ende eines jeden pulsartigen Spanbruchsignales der Fall.

Wenn während eines Spanbruchsignales ein plötzlicher Rauschanstieg des Grundgeräuschsignals erfolgt, verhindert der monostabile Multivibrator 72 ein Blockieren der Trennstufe 6, indem über das Meßtor 64 ein Umschalten des Multiplexers 52 zum ersten Eingang 51 immer dann erfolgt, wenn nach dem Umschalten auf den zweiten Eingang 61 eine Zeit abgelaufen ist, die länger ist als die längste erwartete Zeit für ein pulsartiges Spanbruchsignal. Diese Auszeit liegt in der Größenordnung von 10 bis 100 ms und wird dem monostabilen Multivibrator 72 über eine Auszeitleitung 73 mitgeteilt. Der Komparator 8 schaltet somit jeweils beim Auftreten eines Impulses des Spanbruchsignales beide monostabilen Multivibratoren 69 und 72 ein, wobei im Normalfall, wie sich aus den obigen Ausführungen ergibt, jeweils nur der monostabile Multivibrator 69 den Umschaltvorgang des Multiplexers 52 bewirkt.

## Patentansprüche

1. Verfahren zur Überwachung der spanabhebenden Bearbeitung eines Werkstückes, insbesondere beim Drehen, durch Analysieren der am Werkzeug erfaßbaren Schallemission, die mit Hilfe eines elektroakustischen Wandlers in ein elektrisches Schallemissionssignal umgewandelt wird, das in einem Bandpaßfilter gefiltert wird und dessen Amplitude erfaßt und über einen vorgegebenen Zeitraum gemittelt mit einem vorgegebenen anpaßbaren Schwellenwert verglichen wird, **dadurch gekennzeichnet**, daß die im Schallemissionssignal enthaltenen Anteile des aus dem Schneidgeräusch und Reibgeräusch resultierenden kontinuierlichen Grundgeräuschsignals einerseits und der diesem gegenüber mit einer höheren Amplitude überlagerten pulsartigen Spanbruchsignale andererseits separiert und getrennt analysiert sowie bewertet werden, wobei zur Trennung des Spanbruchsignals und des Grundgeräuschsignals das Schallemissionssignal mit einem Schwellenwertsignal verglichen wird, das aus dem Rauschmittelwert des Grundgeräuschsignals abgeleitet wird, indem für die Mittelwertbildung durch Ausblenden nur diejenigen Werte des Schallemissionssignals berücksichtigt werden, die außerhalb der den Spanbruchsignalen zugeordneten Zeitfenstern auftreten.

2. Verfahren nach Anspruch 1, dadurch gekennzeichnet, daß zur Analyse der Spanbruchsignale und/oder des Grundgeräuschsignals Verteilungsfunktionen diverser Parameter diese Signale bestimmt und einzeln oder miteinander verknüpft ausgewertet werden.

3. Verfahren nach Anspruch 2, dadurch gekennzeichnet, daß zur Überwachung der Gleichmäßigkeit der Qualität eines Drehvorganges die Konstanz und die Streubreite der aus den Spanbruchsignalen abgeleiteten Spanbruchfolgefrequenz erfaßt und analysiert wird.

4. Verfahren nach Anspruch 2 oder 3, dadurch gekennzeichnet, daß die Mittelwerte und die Verteilungen der Amplituden und der Energien der Impulse der Spanbruchsignale ausgewertet und überwacht werden, um Schwankungen der Materialkennwerte des bearbeiteten Werkstückes und/oder der infolge eines Werkzeugverschleißes veränderten Spantemperatur zu überwachen.

5. Verfahren nach Anspruch 2, dadurch gekennzeichnet, daß zur Bewertung des Werkzeugverschleißes und/oder zur Erfassung von Werkzeugausbrüchen die dominierenden spektralen Anteile des Grundgeräusches sowie die mittleren Beträge der Signalamplitude des Grundgeräuschsignales über einen vorgegebenen Zeitbereich, der außerhalb der jeweils durch eine Folge von Impulsen der Spanbruchsignale definierten Zeitfenster liegt, bestimmt werden.

6. Verfahren nach einem der Ansprüche 2 bis 5, dadurch gekennnzeichnet, daß Änderungen der Werkstoffeigenschaften durch Erfassen von Veränderungen der Spanbruchsignalparameter ohne gleichzeitige Veränderung des Pegels des Grundgeräuschsignals ermittelt werden.

7. Verfahren nach Anspruch 5, dadurch gekennzeichnet, daß zur Erhöhung der Zuverlässigkeit der Prozeßbewertung im Hinblick auf den Werkzeugverschleiß überprüft wird, ob sowohl im Grundgeräuschsignal als auch im Spanbruchsignal zeitabhängige Veränderungen in den überwachten Parametern auftreten.

8. Verfahren nach Anspruch 2, dadurch gekennzeichnet, daß Verteilungsfunktionen der Spanbruchfolgefrequenz, der Amplituden, der Energien, der Anstiegszeiten und Signaldauern der Spanbruchsignale sowie Verteilungsfunktionen des Pegels und der spektralen Anteile des Grundgeräusches mit abgespeicherten Musterverteilungen verglichen werden, wobei die Verteilungsfunktionen und die Abweichungen von den Musterverteilungen als Grundlage für Bewertungen des Spanverhaltens und des Werkzeugverschleißes verwendet werden.

9. Verfahren nach Anspruch 2 oder 4, dadurch gekennzeichnet, daß die Amplitudenverteilung der Impulse der Spanbruchsignale für ein vorgebbares Amplitudenintervall erfaßt sowie aufgrund der erfaßten Verteilungsfunktion die Anzahl der erwarteten Signale oberhalb eines außerhalb des vorgebbaren Amplitudenintervalles liegenden Grenzwertes berechnet wird, und der errechnete Häufigkeitswert mit der tatsächlich auftretenden Anzahl der Impulse mit Amplituden oberhalb des Grenzwertes verglichen wird.

10. Vorrichtung zur Durchführung des Verfahrens nach Anspruch 1 mit einem am Werkzeughalter angeordneten, das Schallemissionssignal umsetzenden elektroakustischen Wandler, der über einen Bandpaßfilter, einen Verstärker und einen Amplitudendetektor einen Mittelwertbildner speist, dessen Ausgangssignal den ersten Eingang eines Komparators speist, dessen zweiter Eingang mit einer Schwellenwertspannung beaufschlagt ist, **dadurch gekennzeichnet**, daß dem Mittelwertbildner (55) eine von einem Meßtor (64) angesteuerte Umschalteinrichtung (52) zugeordnet ist, durch die die Speisung des Mittelwertbildners (55) mit dem Schallemissionssignal (50) während der pulsartigen Spanbruchsignale unterbrechbar ist.

11. Vorrichtung nach Anspruch 10, dadurch gekennzeichnet, daß die Umschalteinrichtung (52) während der Unterbrechung der Speisung mit dem Schallemissionssignal eine Speisung mit dem zuletzt bestimmten Mittelwert (58) des von den Spanbruchsignalen befreiten Schallemissionssignals erfolgt.

12. Vorrichtung nach Anspruch 11, dadurch gekennzeichnet, daß die Umschalteinrichtung ein dem Mittelwertbildner (55) vorgeschalteter Multiplexer (52) ist, dessen erster Eingang (51) mit dem Amplitudendetektor und dessen zweiter Eingang (61) mit einem Zwischenspeicher (58) verbunden ist, in dem der jeweils zuletzt bestimmte Mittelwert gespeichert ist.

13. Vorrichtung nach einem der Ansprüche 10 bis 12, dadurch gekennzeichnet, daß über das Meßtor (64) eine Spanbruchsignalprozessoranordnung (7, 15, 17, 19) angesteuert ist, durch die die vom Grundgeräuschsignal des Schallemissionssignals getrennten Spanbruchsignale statistisch analysierbar sind.

14. Vorrichtung nach einem der Ansprüche 10 bis 13, dadurch gekennzeichnet, daß der Mittelwertbildner (55) mit einem Grundgeräuschsignalprozessor (10) Verbunden ist, durch den eine statistische Analyse des von den Spanbruchsignalen befreiten Schallemissionssignals durchführbar ist.

15. Vorrichtung nach Anspruch 13 und 14, dadurch gekennzeichnet, daß die Spanbruchsignalprozessoranordnung (7, 15, 17, 19) und der Grundgeräuschsignalprozessor (10) eine Bewertungseinheit (11) speisen, durch die der Werkzeugverschleiß sowie die Bearbeitungsqualität bewertbar sind.

## Claims

1. A method of monitoring the cutting machining of a workpiece, in particular in a turning operation, by analysing the sound emission which can be detected at the tool and which is converted by means of an electro-acoustic transducer into an electrical sound-emission signal which is filtered in a band-pass filter and whose amplitude is detected and compared averaged over a predetermined period of time to a predetermined matchable threshold value, characterised in that the components, contained in the sound-emission signal, of the continuous ground noise signal resulting from the cutting noise and frictional noise on the one hand and the pulse-like chip breakage signals which are superimposed on the ground noise signal at a higher amplitude on the other hand are separated and separately analyzed and evaluated, wherein for separation of the chip breakage signal and the ground noise signal the sound-emission signal is compared to a threshold value signal which is derived from a noise average value of the ground noise signal by a procedure whereby only those values of the sound-emission signal which occur outside the time windows associated with the chip breakage signals are taken into consideration for the average-forming operation, by a cutting-out step.

2. A method according to claim 1 characterised in that for analysis of the chip breakage signals and/or the ground noise signal distribution functions of various parameters said signals are determined and evaluated individually or interrelatedly.

3. A method according to claim 2 characterised in that for monitoring the uniformity of the quality of a turning operation the constancy and the dispersion width of the chip breakage rate which is derived from the chip breakage signals is detected and analysed.

4. A method according to claim 2 or claim 3 characterised in that the mean values and the distributions of the amplitudes and the energies of the pulses of the chip breakage signals are evaluated and monitored in order to monitor fluctuations in the material characteristic values of the machined workpiece and/or the chip temperature which is altered as a result of tool wear.

5. A method according to claim 2 characterised in that for evaluation of tool wear and/or for detecting tool fractures the dominant spectral components of the ground noise and the mean amounts of the signal amplitude of the ground noise signal are determined over a predetermined time range which lies outside the time windows respectively defined by a sequence of pulses of the chip breakage signals.

6. A method according to one of claims 2 to 5 characterised in that changes in the material properties are determined by detecting variations in the chip breakage signal parameters without a simultaneous change in the level of the ground noise signal.

7. A method according to claim 5 characterised in that to increase the reliability of process evaluation in regard to tool wear a check is made to ascertain whether time-dependent variations occur in the monitored parameters both in the ground noise signal and also in the chip breakage signal.

8. A method according to claim 2 characterised in that distribution functions of the chip breakage rate, amplitudes, energies, rise times and signal durations of the chip breakage signals as well as distribution functions of the level and the spectral components of the ground noise are compared to stored pattern distributions, wherein the distribution functions and the deviations from the pattern distributions are used as a basis for assessments of the chip behaviour and the tool wear.

9. A method according to claim 2 or claim 4 characterised in that the amplitude distribution of the pulses of the chip breakage signals is detected for a predeterminable amplitude interval and on the basis of the detected distribution function the number of expected signals above a limit value which lies outside the predeterminable amplitude interval is calculated, and the calculated frequency value is compared to the actually occurring number of pulses with amplitudes above the limit value.

10. Apparatus for carrying out the method according to claim 1 comprising an electro-acoustic transducer which is arranged at the tool holder and which converts the sound-emission signal and which by way of a band-pass filter, an amplifier and an amplitude detector feeds an average-forming means whose output signals feeds the first input of a comparator whose second input receives a threshold value voltage, characterised in that associated with the average-forming means (55) is a change-over switching means (52) which is actuated by a measuring gate (64) and by which the feed to the average-forming means (55) with the sound-emission signal (50) can be interrupted during the pulse-like chip breakage signals.

11. Apparatus according to claim 10 characterised in that the change-over switching means (52), during the interruption in the feed with the sound-emission signal, has a feed with the last-determined average value (58) of the sound-emission signal which is freed of the chip breakage signals.

12. Apparatus according to claim 11 characterised in that the change-over switching means is a multiplexer (52) which is connected on the input side of the average-forming means (55) and whose first input (51) is connected to the amplitude detector and whose second input (61) is connected to an intermediate storage means (58) in which the respective last-determined average value is stored.

13. Apparatus according to one of claims 10 to 12 characterised in that a chip breakage signal processor arrangement (7, 15, 17, 19) is actuated by way of the measuring gate (64), wherein the chip breakage signals which are separated from the ground noise signal of the sound-emission signal can be statistically analyzed by the chip breakge signal processor arrangement.

14. Apparatus according to one of claims 10 to 13 characterised in that the average-forming means (55) is connected to a ground noise signal processor (10) for carrying out statistical analysis of the sound-emission signal which is freed of the chip breakage signals.

15. Apparatus according to claims 13 and 14 characterized in that the chip breakage signal processor arrangement (7, 15, 17, 19) and the ground noise signal processor (10) feed an assessment unit (11) by which tool wear and machining quality can be assessed.

## Revendications

1. Procédé pour contrôler l'usinage par enlèvement de copeaux d'une pièce, notamment pour l'usinage au tour, en analysant l'émission de bruit pouvant être enregistrée au niveau de l'outil, qui est transformée à l'aide d'un convertisseur électro-acoustique en un signal électrique d'émission de bruit, qui est filtré dans un filtre passe-bande et dont l'amplitude est enregistrée et, en en formant la valeur moyenne sur une période prédéterminée, comparée à une valeur de seuil adaptable prédéterminée, **caractérisé** en ce qu'on sépare les parts, contenues dans le signal d'émission de bruit, d'une part du signal continu de bruit de fond résultant du bruit de coupe et du bruit de frottement, et d'autre part des signaux de détachement de copeaux, sous forme d'impulsions, qui sont superposés à ce signal de bruit de fond avec une amplitude supérieure, puis on analyse et évalue séparément lesdites parts, le signal d'émission de bruit étant, afin de séparer les signaux de détachement de copeaux du signal de bruit de fond, comparé à un signal de valeur de seuil qui est dérivé de la valeur moyenne de bruit du signal de bruit de fond, cette valeur moyenne étant formée en ne tenant compte, par élimination, que des valeurs du signal d'émission de bruit qui apparaissent en dehors des fenêtres de temps associées aux signaux de détachement de copeaux.

2. Procédé selon la revendication 1**, caractérisé** en ce qu'afin d'analyser les signaux de détachement de copeaux et/ou le signal de bruit de fond, on détermine des fonctions de distribution de divers paramètres de ces signaux, et on les évalue individuellement ou en combinaison.

3. Procédé selon la revendication 2, **caractérisé** en ce qu'afin de contrôler l'uniformité de la qualité d'une opération d'usinage au tour, on enregistre et on analyse la constance et la dispersion de la fréquence de répétition des détachements de copeaux, fréquence qui est dérivée des signaux de détachement de copeaux.

4. Procédé selon la revendication 2 ou 3, **caractérisé** en ce qu'on évalue et on contrôle les valeurs moyennes et les distributions des amplitudes et des énergies des impulsions de signaux de détachement de copeaux, afin de contrôler les fluctuations des valeurs caractéristiques du matériau de la pièce usinée, et/ou la modification de la température des copeaux suite à l'usure de l'outil.

5. Procédé selon la revendication 2, **caractérisé** en ce qu'afin d'évaluer l'usure de l'outil et/ou de détecter des ruptures de l'outil, on détermine les parts spectrales dominantes du bruit de fond ainsi que les valeurs moyennes d'amplitude du signal de bruit de fond sur une période prédéterminée, située en dehors des fenêtres de temps chaque fois définies par une succession d'impulsions de signaux de détachement de copeaux.

6. Procédé selon l'une quelconque des revendications 2 à 5, **caractérisé** en ce qu'on détermine les modifications des propriétés du matériau en détectant les modifications des paramètres des signaux de détachement de copeaux qui ne sont pas accompagnées d'une modification simultanée du niveau du signal de bruit de fond.

7. Procédé selon la revendication 5, **caractérisé** en ce qu'afin d'augmenter la fiabilité de l'évaluation du processus en ce qui concerne l'usure de l'outil, on contrôle si des modifications en fonction du temps des paramètres surveillés apparaissent tant dans le signal de bruit de fond que dans les signaux de détachement de copeaux.

8. Procédé selon la revendication 2, **caractérisé** en ce qu'on compare, à des distributions typiques mémorisées, les fonctions de distribution de la fréquence de répétition des détachements de copeaux, les fonctions de distribution des amplitudes, énergies, temps de croissance et durées des signaux de détachement de copeaux, ainsi que les fonctions de distribution du niveau et des parts spectrales du bruit de fond, les fonctions de distribution et les écarts par rapport aux distributions typiques étant utilisées comme base pour l'évaluation du comportement de coupe et de l'usure de l'outil.

9. Procédé selon la revendication 2 ou 4, **caractérisé** en ce qu'on enregistre la distribution d'amplitude des impulsions de signaux de détachement de copeaux pour un intervalle prédéterminable d'amplitude, on calcule, sur la base de la fonction de distribution enregistrée, le nombre de signaux attendus au-dessus d'une valeur limite située en dehors de l'intervalle prédéterminable d'amplitude, et on compare le nombre calculé au nombre effectivement obtenu d'impulsions présentant des amplitudes supérieures à la valeur limite.

10. Dispositif pour la mise en oeuvre du procédé selon la revendication 1, avec un convertisseur électro-acoustique, qui est disposé sur le porte-outil, transforme le signal d'émission de bruit et alimente, par l'intermédiaire d'un filtre passe-bande, d'un amplificateur et d'un détecteur d'amplitude, un formateur de valeur moyenne dont le signal de sortie alimente la première entrée d'un comparateur dont la seconde entrée est sollicitée par une tension de valeur de seuil, **caractérisé** en ce qu'un dispositif de commutation (52), asservi par une porte de mesure (64) et permettant d'interrompre l'alimentation en signal d'émission de bruit (50) du formateur de valeur moyenne (55) pendant les signaux de détachement de copeaux sous forme d'impulsions, est associé au formateur de valeur moyenne (55).

11. Dispositif selon la revendication 10, **caractérisé** en ce que le dispositif de commutation (52) effectue, pendant l'interruption de l'alimentation avec le signal d'émission de bruit, une alimentation avec la dernière valeur moyenne déterminée (58) du signal d'émission de bruit débarrassé des signaux de détachement de copeaux.

12. Dispositif selon la revendication 11, **caractérisé** en ce que le dispositif de commutation est un multiplexeur (52), qui est monté en amont du formateur de valeur moyenne (55) et dont la première sortie (51) est reliée au détecteur d'amplitude et la seconde sortie (61) à une mémoire intermédiaire (58), dans laquelle est mémorisée la dernière valeur moyenne déterminée.

13. Dispositif selon l'une quelconque des revendications 10 à 12, **caractérisé** en ce qu'un montage (7, 15, 17, 19) de traitement des signaux de détachement de copeaux, qui permet d'analyser statistiquement les signaux de détachement de copeaux séparés du signal de bruit de fond du signal d'émission de bruit, est asservi par l'intermédiaire de la porte de mesure (64).

14. Dispositif selon l'une quelconque des revendications 10 à 13, **caractérisé** en ce que le formateur de valeur moyenne (55) est relié à une unité (10) de traitement du signal de bruit de fond, qui permet de réaliser une analyse statistique du signal d'émission de bruit débarrassé des signaux de détachement de copeaux.

15. Dispositif selon la revendication 13 ou 14, **caractérisé** en ce que le montage (7, 15, 17, 19) de traitement des signaux de détachement de copeaux et l'unité (10) de traitement du signal de bruit de fond alimentent une unité d'évaluation (11), qui permet d'évaluer l'usure de l'outil ainsi que la qualité d'usinage.
